# EUROPÄISCHE PATENTSCHRIFT

(11) **EP 2 307 676 B1**
(45) Veröffentlichungstag und Bekanntmachung des Hinweises auf die Patenterteilung: **23.09.2015**
(21) Anmeldenummer: 09777352.7
(22) Anmeldetag: 22.07.2009
(51) Int. Cl.: F01N 9/00, F01N 3/035, F01N 3/20

(54) **VERFAHREN ZUM BETREIBEN EINER ABGASREINIGUNGSANLAGE MIT EINEM SCR-KATALYSATOR**
METHOD FOR OPERATING AN EXHAUST GAS TREATMENT SYSTEM HAVING A SCR CATALYTIC CONVERTER
PROCÉDÉ POUR FAIRE FONCTIONNER UN SYSTÈME DE TRAITEMENT DE GAZ D'ÉCHAPPEMENT COMPORTANT UN CATALYSEUR SCR

(30) Priorität: 07.08.2008 DE 102008036884
(43) Veröffentlichungstag der Anmeldung: 13.04.2011
(73) Patentinhaber: Daimler AG, 70327 Stuttgart (DE)
(72) Erfinder: CHRISTNER, Bernd, 72584 Hülben (DE); HOFMANN, Uwe, 64385 Reichelsheim (DE); KAISER, Alexander, 70736 Fellbach (DE); PAULE, Markus, 71404 Korb (DE)
(74) Vertreter: JENSEN & SON
(86) Internationale Anmeldenummer: PCT/EP2009/005305
(87) Internationale Veröffentlichungsnummer: WO 2010/015327

(56) Entgegenhaltungen:
- DE-A1-102005 042 490
- DE-A1-102006 041 676

## Beschreibung

Die Erfindung betrifft ein Verfahren zum Betreiben einer Abgasreinigungsanlage mit einem SCR-Katalysator zur Reinigung eines Abgases eines Kraftfahrzeug-Verbrennungsmotors, bei welchem ein Ammoniak enthaltendes Reduktionsmittel dem Abgas zudosiert wird und dem SCR-Katalysator ein entsprechend der Zudosierung mit NH3 angereichertes Abgas zugeführt wird, wobei durch ein Rechenmodell ein Ammoniak-Füllstandswert für einen Füllstand von im SCR-Katalysator gespeichertem Ammoniak berechnet wird.

Zur katalytisch unterstützten Entfernung von Stickoxiden (NOx) aus Brennkraftmaschinenabgasen ist es bekannt, dem Abgas der Brennkraftmaschine wässerige Harnstofflösung als ein Ammoniak (NH₃) enthaltendes Reduktionsmittel zuzugeben. Im heißen Abgas wird durch Thermolyse und/oder Hydrolyse NH₃ als eigentliches selektives Reduktionsmittel in Bezug auf die NOx-Reduktion an einem so genannten SCR-Katalysator freigesetzt. Dabei ergibt sich das Problem, eine für die angestrebte Reinigungswirkung passende Zugaberate für das Reduktionsmittel zu ermitteln, wobei außerdem eine Überdosierung, die einen unerwünschten Schlupf von NH₃ zur Folge haben kann, vermieden werden sollte.

Zur Lösung dieser Probleme wird in der EP 1 348 477 A1 vorgeschlagen, eine Verbrauchsrate von im Katalysator gespeichertem NH₃ und eine NOx-Reinigungsrate zu ermitteln und in Abhängigkeit von diesen Größen im Zusammenhang mit einem Füllstand von im Katalysator gespeichertem NH₃ die Reduktionsmittelzugabe zu steuern.

Aus der Offenlegungsschrift EP 0 554 766 A1 ist ein Verfahren zur NOx-Minderung in Abgasen durch gesteuerte überstöchiometrische Zugabe von NH₃ bekannt, bei welchem stromauf eines Katalysators NH₃ so lange zudosiert wird, bis die im Katalysator gespeicherte NH₃-Menge einen oberen Schwellenwert erreicht hat. Das im Katalysator gespeicherte NH₃ wird durch Reaktion mit dem von der Brennkraftmaschine emittierten und dem Katalysator zugeführten NOx verbraucht, wodurch der Schadstoff NOx aus dem Abgas entfernt wird. Die NH₃-Zugabe wird wieder aufgenommen, wenn die im Katalysator gespeicherte NH₃-Menge einen unteren Schwellenwert erreicht hat.

In diesen und weiteren bekannten, ähnlichen Verfahren erfolgt meist eine modellbasierte Verknüpfung von Messwerten und gespeicherten Kennwerten, beispielsweise für den SCR-Katalysator. Dabei werden eine NH₃-Zuführrate und eine modellierte Verbrauchsrate durch eine laufend durchgeführte Integration bilanziert und die Reduktionsmittel-Dosierrate so gewählt, dass ein angestrebter NH₃-Füllstand im Katalysator und damit ein angestrebter Katalysatorwirkungsgrad resultiert. Es hat sich jedoch gezeigt, dass sich dabei beispielsweise durch Parameterveränderungen bedingte Fehler im Laufe der Zeit summieren, so dass der modellierte NH₃-Füllstand des Katalysators zunehmend schlechter dem tatsächlichen Wert entspricht und Fehldosierungen in Form einer Unter- oder Überdosierung resultieren. Folge hiervon ist eine verminderte Reinigungswirkung oder ein erhöhter NH₃-Schlupf. Als Lösung zu diesem Problem wird in der DE 101 00 420 A1 vorgeschlagen, die Dosierrate zu adaptieren, indem mindestens eine relevante Messgröße bei bestimmten Betriebszuständen erfasst und durch Korrektur an einen erwarteten Wert angepasst wird.

In dem in der DE 10 2006 041 676 A1 beschriebenen Verfahren wird ein NH₃-Füllstand des SCR-Katalysators durch Beeinflussung der Dosierrate korrigiert, wenn entsprechende Differenzen zwischen einem von einem Katalysatormodell berechneten NH₃-Füllstand und einem Füllstandssollwert festgestellt werden. Bei entsprechend häufigen Korrekturen ist eine Adaption der Dosierrate durch Verschieben einer Dosierventil-Kennlinie vorgesehen.

Es hat sich jedoch erwiesen, dass weitere Verbesserungen notwendig sind, um Anforderungen für höchste Stickoxidumsätze gerecht werden zu können.

Aufgabe der Erfindung ist es daher, ein Verfahren zum Betreiben einer Abgasreinigungsanlage mit einem SCR-Katalysator anzugeben, welches einen weiter verbesserten Stickoxidumsatz ermöglicht.

Diese Aufgabe wird durch ein Verfahren mit den Merkmalen des Anspruchs 1 gelöst.

Bei dem erfindungsgemäßen Verfahren wird durch ein Rechenmodell einerseits ein NH₃-Füllstandswert für einen Füllstand von im SCR-Katalysator gespeichertem Ammoniak berechnet. Andererseits wird durch das Rechenmodell eine Modell-Dosierrate für die Zudosierung des Reduktionsmittels ins Abgas berechnet, mit der ein durch das Rechenmodell vorgegebener Soll-FüAstand von im SCR-Katalysator gespeichertem NH₃ und/oder ein durch das Rechenmodell vorgegebener Soll-Wirkungsgrad für einen NOx-Umsatz mit im SCR-Katalysator gespeichertem und/oder dem SCR-Katalysator zugeführtem NH₃ wenigstens annähernd erreicht werden. Weiter sind für die Modell-Dosierrate eine Korrektur durch einen veränderbaren Langzeitadaptionsfaktor zu einer Soll-Dosierrate und für den Ammoniak-Füllstandswert eine Korrektur durch einen veränderbaren Kurzzeitadaptionsfaktor zu einem angenommenen Ist-Füllstand vorgesehen. Die Dosiereinheit wird dementsprechend zur Abgabe der Soll-Dosierrate angesteuert.

Somit ist erfindungsgemäß die Möglichkeit vorgesehen, eine direkt auf die Modell-Dosierrate einwirkende Korrektur vorzunehmen, welche zwar einerseits sofort wirksam wird, andererseits jedoch gegebenenfalls über längere Zeit erhalten bleibt. Zum anderen ist die Möglichkeit vorgesehen, eine vorwiegend kurzzeitig wirkende Korrektur des modellierten NH₃-Füllstandswerts vorzunehmen. Auf diese Weise können sowohl kurzzeitig auftretende Störeinflüsse, als auch über längere Zeit wirksame Störeinflüsse, beispielsweise allmählich fortschreitende Alterungs- oder Drifteffekte, kompensiert werden.

In Ausgestaltung der Erfindung werden laufend NOx- und/oder NH₃-Emissionswerte des Abgases ermittelt und die NOx- und/oder NH₃-Emissionswerte in Bezug auf das Erfüllen eines vorbestimmten Kurzzeitadaptionskriteriums und/oder eines Langzeitadaptionskriteriums durch die Steuereinheit zyklisch ausgewertet. Mit dieser vorteilhaften Ausgestaltung erfolgt in aufeinander folgenden Zyklen eine Plausibilitätsüberprüfung des modellierten NH₃-Füllstandswerts durch Abgleich mit Emissionswerten. Die Emissionswerte können messtechnisch ermittelt oder Betriebskennfeldern entnommen sein. Eine im Anschluss an einen Zyklus gegebenenfalls zum angenommenen Ist-Füllstand korrigierter modellierter NH₃-Füllstandswert dient dann als aktueller Füllstandswert, auf den eine weitere bilanzierende Integration und Dosierung aufsetzt, um den Soll-Füllstand bzw. Soll-Wirkungsgrad zu erreichen. Dies ist gleichbedeutend mit einer Kurzzeitadaption des NH₃-Füllstandswerts, mit welcher zeitnah auf Kurzfristeinflüsse reagiert wird, welche gegebenenfalls zu einer Fehlmodellierung des NH₃-Füllstands führen. Hingegen wirkt eine gegebenenfalls vorgenommene Korrektur der Modell-Dosierrate durch insbesondere Multiplikation mit dem Langzeitadaptionsfaktor über einen Zyklus hinaus, was gleichbedeutend mit einer Langzeitadaption ist. Durch die erfindungsgemäße Vorgehensweise mit zyklisch vorgenommener Überprüfung modellierter Betriebsgrößen ist eine zyklische Anpassung dieser Betriebsgrößen ermöglicht, falls dies erforderlich ist. Auf diese Weise ist eine hochgenaue Modellierung gewährleistet und es werden eine optimale NH3-Füllstandseinstellung und ein optimaler Katalysatorwirkungsgrad erzielt.

In weiterer Ausgestaltung der Erfindung werden durch Integration in aufeinander folgenden Integrationszyklen vorgebbarer Länge jeweils parallel ein NOx-Rohemissionswert, ein NOx-Reinemissions-Schätzwert und ein NOx-Reinemissions-Messwert und ferner als Adaptionskennwert eine auf den NOx-Rohemissionswert bezogene Differenz von NOx-Reinemissions-Messwert und NOx-Reinemissions-Schätzwert ermittelt.

Der NOx-Rohemissionswert ist bevorzugt durch Integration eines NOx-Gehalts im Abgas eingangsseitig des SCR-Katalysators ermittelt. Dabei kann der NOx-Gehalt eingangsseitig des SCR-Katalysators messtechnisch durch einen entsprechend angeordneten NOx-Sensor oder modellbasiert gewonnen werden. Der NOx-Rohemissionswert repräsentiert eine in einem jeweiligen Integrationszyklus in den SCR-Katalysator einströmende NOx-Menge und somit die NOx-Belastung des SCR-Katalysators.

Der NOx-Reinemissions-Schätzwert ist bevorzugt durch Integration eines durch das Rechenmodell berechneten NOx-Gehalts im Abgas ausgangsseitig des SCR-Katalysators ermittelt. Das Rechenmodell schätzt anhand vorliegender Betriebsgrößen wie Modell-Dosierrate, Ist-Füllstand, Katalysatortemperatur, Abgasmassenstrom und gegebenenfalls weiteren Größen die NOx-Umsatzrate des Katalysators. Durch Integration über einen Integrationszyklus ergibt sich daraus zusammen mit der in den SCR-Katalysator einströmenden NOx-Menge eine den SCR-Katalysator im Integrationszyklus verlassende NOx-Menge als NOx-Reinemissions-Schätzwert.

Der NOx-Reinemissions-Messwert ist bevorzugt durch Integration eines aus einem Signal eines ausgangsseitig des SCR-Katalysators angeordneten NOx-Sensors abgeleiteten NOx-Gehalts im Abgas ausgangsseitig des SCR-Katalysators ermittelt.

Durch Bildung der Differenz von NOx-Reinemissions-Schätzwert und NOx-Reinemissions-Messwert werden Abweichungen der modellierten NOx-Reinemission von der gemessenen Reinemission erfasst. Dabei bildet der Adaptionskennwert als die auf den NOx-Rohemissionswert bezogene Differenz einen sehr aussagefähigen Kennwert in Bezug auf die Modellierungsgüte des Rechenmodells.

Der Adaptionskennwert wird erfindungsgemäß als maßgebender Kennwert zur Beurteilung der Notwendigkeit einer Langzeit- und/oder Kurzzeitadaption herangezogen. Insbesondere wird in weiterer Ausgestaltung der Erfindung das Langzeitadaptionskriterium als erfüllt angesehen, wenn der Adaptionskennwert einen vorgebbaren oberen Schwellenwert überschreitet und in einer noch weiteren Ausgestaltung der Erfindung wird das Kurzzeitadaptionskriterium als erfüllt angesehen, wenn der Adaptionskennwert einen vorgebbaren unteren Schwellenwert unterschreitet.

In weiterer Ausgestaltung der Erfindung wird bei erfülltem Langzeitadaptionskriterium der Langzeitadaptionsfaktor um einen vorgebbaren Betrag verändert und bei erfülltem Kurzzeitadaptionskriterium der Kurzeitadaptionsfaktor um einen vorgebbaren Betrag verändert. Der Betrag, um den der Langzeit- bzw. Kurzzeitadaptionsfaktor gegebenenfalls verändert wird, kann dabei fest vorgegeben sein oder in Abhängigkeit von der Größe des Adaptionskennwerts vorgebbar sein. Im zweitgenannten Fall kann analog zu einer Proportionalregelung bei vergleichsweise großen Fehlmodellierungen entsprechend stark korrigiert werden, womit eine Annäherung an die Sollgrößen entsprechend rasch ermöglicht ist.

In weiterer Ausgestaltung der Erfindung werden eine aktuelle Füllkapazität für eine aktuell im SCR-Katalysator maximal speicherbare NH₃-Menge und ein aktuell möglicher maximaler Wirkungsgrad für einen NOx-Umsatz des SCR-Katalysators ermittelt und bei Unterschreiten eines vorgebbaren Schwellenwertes für die aktuelle Füllkapazität ein vorgebbarer Bruchteil des aktuell möglichen maximalen Wirkungsgrads als Soll-Wirkungsgrad vorgegeben. Beispielsweise bei einer hohen Katalysatortemperatur kann die Füllkapazität des SCR-Katalysators so gering sein, dass die Einstellung des Soll-Füllstands Schwierigkeiten bereitet. Durch die erfindungsgemäße Vorgehensweise ist auch in diesen Fällen eine genaue Modellierung ermöglicht, da die Soll-Dosierrate des Reduktionsmittels dann mit Blick auf den angestrebten Soll-Wirkungsgrad des Katalysators eingestellt wird. Erfindungsgemäß ist auch bei dieser Betriebsweise eine Adaption vorgesehen. Hierzu wird in weiterer Ausgestaltung der Erfindung der Langzeitadaptionsfaktor derart festgelegt, dass der daraus resultierende NOx-Reinemissions-Schätzwert im zurückliegenden Integrationszyklus zu einem Adaptionskennwert von Null oder annähernd Null geführt hätte.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Dabei zeigen:
- Fig. 1: ein schematisches Blockbild eines Kraftfahrzeug-Verbrennungsmotors mit einer angeschlossenen Abgasreinigungsanlage,
- Fig. 2: ein Diagramm zur Verdeutlichung der NH₃-Speicherfähigkeit eines SCR-Katalysators,
- Fig. 3: ein Diagramm zur Verdeutlichung der Temperaturabhängigkeit der NH₃-Speicherfähigkeit,
- Fig. 4: ein Diagramm zur Verdeutlichung der Abhängigkeit von Stickoxidumsatz und NH₃-Schlupf vom NH₃-Füllstand eines SCR-Katalysators,
- Fig. 5: eine schematische Blockbilddarstellung zur Verdeutlichung einer bevorzugten Vorgehensweise zur Ermittlung des NH₃-Füllstand des SCR-Katalysators der Abgasreinigungsanlage und
- Fig. 6: ein Diagramm mit beispielhaften Zeitverläufen von aufintegrierten Emissionswerten, die zur Ermittlung eines Adaptionskennwerts herangezogen werden.

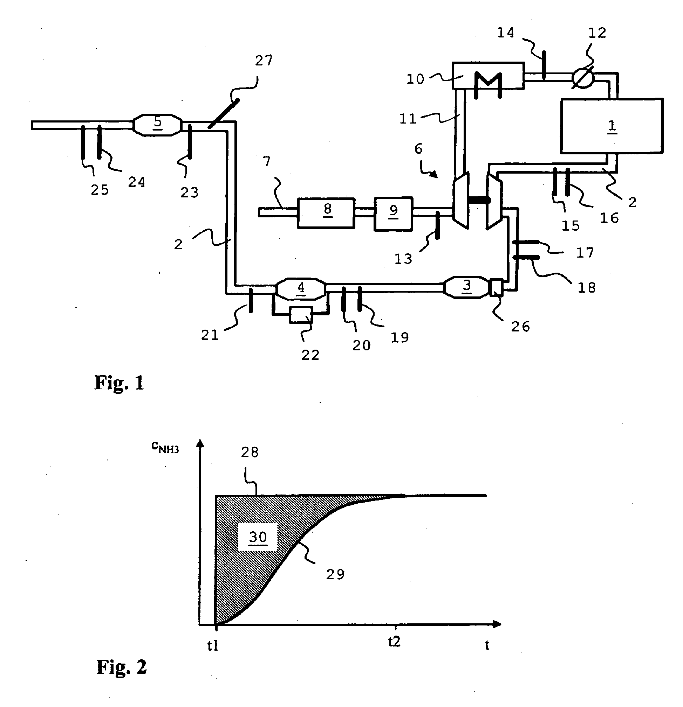

Fig. 1 zeigt beispielhaft ein schematisches Blockbild eines Verbrennungsmotors 1 eines nicht dargestellten Kraftfahrzeugs mit zugehöriger Abgasreinigungsanlage. Der Verbrennungsmotor 1 ist vorzugsweise als luftverdichtende Brennkraftmaschine, nachfolgend vereinfacht als Dieselmotor bezeichnet, ausgebildet. Das vom Dieselmotor 1 ausgestoßene Abgas wird von einer Abgasleitung 2 aufgenommen und durchströmt nacheinander einen Oxidationskatalysator 3, einen Partikelfilter 4 und einen NOx-Reduktionskatalysator 5. Oxidationskatalysator 3 und Partikelfilter 4 können auch eng benachbart in einem gemeinsamen Gehäuse angeordnet sein. Der Partikelfilter 4 ist vorzugsweise mit einer einen Rußabbrand und/oder eine NO-Oxidation fördernder katalytischen Beschichtung versehen.

Zur Beheizung des Oxidationskatalysators 3 bzw. des Abgases kann wie dargestellt eine Heizeinrichtung 26 eingangsseitig des Oxidationskatalysators 3 in der Abgasleitung 2 angeordnet sein. Die Heizeinrichtung 26 kann als elektrisches Heizelement oder auch als ein Wärme liefernder Reformer oder Vorverbrenner ausgebildet sein. Eine Aufheizung des Abgases kommt insbesondere bei einer Regeneration des Partikelfilters 4 durch Rußabbrand in Betracht. Zur Feststellung der Notwendigkeit einer solchen Regeneration ist dem Partikelfilter 4 ein Differenzdrucksensor 22 zugeordnet, welcher ein bezüglich einer Partikelbeladung auswertbares Signal liefert. Ferner ist ein Abgasturbolader 6 vorgesehen, dessen Turbine vom Abgasstrom angetrieben wird und dessen Verdichter über eine Ansaugluftleitung 7 angesaugte Luft über eine Luftzufuhrleitung 11 dem Dieselmotor 1 zuführt. Der Abgasturbolader 6 ist vorzugsweise als so genannter VTG-Lader mit einer variablen Einstellung seiner Turbinenschaufeln ausgebildet.

Zur Einstellung der dem Dieselmotor 1 zugeführten Luftmenge ist in der Luftzufuhrleitung 11 eine Drosselklappe 12 angeordnet. Zur Reinigung der Ansaugluft bzw. zur Messung der Ansaugluftmenge sind ein Luftfilter 8 bzw. ein Luftmassenmesser 9 in der Ansaugluftleitung 7 angeordnet. Ein in der Luftzufuhrleitung angeordneter Ladeluftkühler 10 dient zur Kühlung der verdichteten Ansaugluft. Weiterhin ist eine nicht dargestellte, über ein Abgasrückführventil einstellbare Abgasrückführung vorgesehen, mit welcher eine vorgebbare Menge rückgeführten Abgases der Ansaugluft zugegeben werden kann.

Stromauf des NOx-Reduktionskatalysators 5 ist eine Zugabestelle mit einer Dosiereinheit 27 zur Zugabe eines Reduktionsmittels in das Abgas angeordnet. Die Versorgung der Dosiereinheit 27 mit dem Reduktionsmittel erfolgt aus einem hier nicht dargestellten Behälter. Nachfolgend wird davon ausgegangen, dass es sich bei dem Reduktionsmittel um wässrige Harnstofflösung handelt, die dem Abgas über die Dosiereinheit 27 dosiert zugegeben wird. Im heißen Abgas wird durch Thermolyse und/oder Hydrolyse NH₃ freigesetzt, welches selektiv bezüglich der Reduktion von im Abgas enthaltenen NOx wirkt. Dementsprechend ist vorliegend der NOx-Reduktionskatalysators 5 als klassischer SCR-Katalysator auf V₂O₅/WA/O₃-Basis oder als Zeolith-beschichteter, geträgerter SCR-Katalysator ausgebildet. Das erfindungsgemäße Verfahren ist jedoch auch zur Dosierung anderer Reduktionsmittel in freier oder gebundener Form mit Vorteil anwendbar. Insbesondere bei Einsatz von wässriger Harnstofflösung als Reduktionsmittel kann zwischen der Dosiereinheit 27 und dem NOx-Reduktionskatalysator 5 eine nicht dargestellte Mischeinheit in der Abgasleitung 2 angeordnet sein, mit welcher durch die Dosiereinheit 27 bereits bevorzugt fein verteilt ins Abgas gesprühtes Reduktionsmittel mit Abgas zu einer möglichst homogenen Mischung vermischt wird. Dadurch können eine Tröpfchenverdampfung und die Freisetzung von NH₃ gefördert werden.

Zur Steuerung des Betriebs der Abgasreinigungsanlage sowie des Dieselmotors 1 ist eine in Fig. 1 nicht dargestellte Steuereinheit vorgesehen, die Informationen über Betriebszustandsgrößen des Dieselmotors 1 und der Abgasreinigungsanlage erhält. Informationen über Motorbetriebsgrößen können z.B. ein abgegebenes Drehmoment oder eine Drehzahl betreffen. Die Steuereinheit umfasst vorzugsweise eine Recheneinheit und eine Speichereinheit sowie eine Ein-Ausgabeeinheit. Dadurch ist die Steuereinheit in der Lage, komplexe Signalverarbeitungsvorgänge vorzunehmen und den Betrieb des Dieselmotors 1 sowie der Abgasreinigungsanlage zu erfassen und zu steuern bzw. zu regeln. Hierfür notwendige Kennfelder sind vorzugsweise in der Speichereinrichtung abgelegt, wobei auch eine adaptive Anpassung der Kennfelder vorgesehen sein kann. Die Kennfelder betreffen hauptsächlich die maßgeblichen Zustandsgrößen des Abgases, wie Massenstrom, Rohemission, Temperatur in Abhängigkeit der Betriebszustandsgrößen des Dieselmotors 1 wie Last, Drehzahl, Luftverhältniszahl etc. Ferner sind Kennfelder für die maßgeblichen Zustandsgrößen des Oxidationskatalysators 3, des Partikelfilters 4 und des SCR-Katalysators 5 vorgesehen. Hinsichtlich des SCR-Katalysators 5 betreffen diese Kennfelder insbesondere den NOx-Umsatz bzw. den Wirkungsgrad in Bezug auf den Stickoxid-Umsatz und die NH₃-Speicherfähigkeit in Abhängigkeit von den hierfür maßgebenden Einflussgrößen.

Die Erfassung von Betriebszuständen des Dieselmotors 1 sowie der Abgasreinigungsanlage und der zugeordneten Einheiten erfolgt vorzugsweise wenigstens teilweise mittels geeigneter Sensoren. Beispielhaft sind in Fig. 1 Drucksensoren 13 und 15 für einen Druck vor dem Verdichter und einen Druck vor der Turbine des Turboladers 6 sowie Temperatursensoren 14, 16, 18, 19, 21, 23 und 24 für jeweils eine Temperatur nach dem Ladeluftkühler 10, vor der Turbine, vor dem Oxidationskatalysator 3, vor und nach dem Partikelfilter 4 sowie vor und nach dem SCR-Katalysator 5 dargestellt. Weitere Sensoren, insbesondere zur Erfassung von Abgaskomponenten können ebenfalls vorgesehen sein. Beispielsweise sind ein Lambdasensor 17 sowie Sensoren 20 und 25 für den Stickoxid- und/oder NH₃-Gehalt im Abgas vorgesehen. Die Signale der Sensoren werden von der Steuereinheit verarbeitet, so dass die wesentlichen Zustandsgrößen jederzeit vorliegen und der Betriebspunkt des Dieselmotors 1 falls notwendig so verändert werden kann, dass ein optimaler bzw. gewünschter Betrieb der Abgasreinigungsanlage ermöglicht ist.

Nachfolgend werden mit Bezug auf die Fig. 2 bis Fig. 4 beispielhaft verschiedene Kenngrößen eines typischen, in der Abgasreinigungsanlage des Dieselmotors 1 eingesetzten SCR-Katalysators 5 erläutert. Dabei ist in Fig. 2 ein Diagramm zur Erläuterung der NH₃-Füllkapazität dargestellt.

Das Diagramm der Fig. 2 stellt einen typischen zeitlichen Verlauf C_{NH3}(t) von NH₃-Konzentrationen C_{NH3} bei einer Beaufschlagung des SCR-Katalysators 5 mit NH₃ dar. Dabei wird davon ausgegangen, dass ein von eingespeichertem NH₃ freier SCR-Katalysator 5 unter isothermen Bedingungen ab dem Zeitpunkt t1 mit einem Abgaseingangsstrom vorgegebener und zeitlich konstanter Größe und NH₃-Eingangskonzentration beaufschlagt wird, was durch die Spur 28 wiedergegeben ist. Entsprechend seiner NH₃-Speicherfähigkeit nimmt im Zeitbereich zwischen t1 und t2 der SCR-Katalysator 5 in zeitlich abnehmendem Maße NH₃ auf. Dem entsprechend bleibt die NH₃-Konzentration in dem den SCR-Katalysator 5 verlassenden Abgasstrom hinter der Eingangskonzentration zurück, was durch die Spur 29 wiedergegeben ist. Zum Zeitpunkt t2 ist der SCR-Katalysator 5 gesättigt, weshalb er kein weiteres NH₃ mehr speichern kann und die Spur 29 in die Spur 28 einmündet. Der NH₃-Füllstand hat dann seinen Maximalwert erreicht. Die dabei vom SCR-Katalysator 5 gespeicherte NH₃-Menge, welche die NH₃-Füllkapazität bzw. NH₃-Speicherfähigkeit unter den entsprechenden Bedingungen darstellt, wird durch die Größe der Fläche 30 zwischen den beiden Spuren 28, 29 repräsentiert.

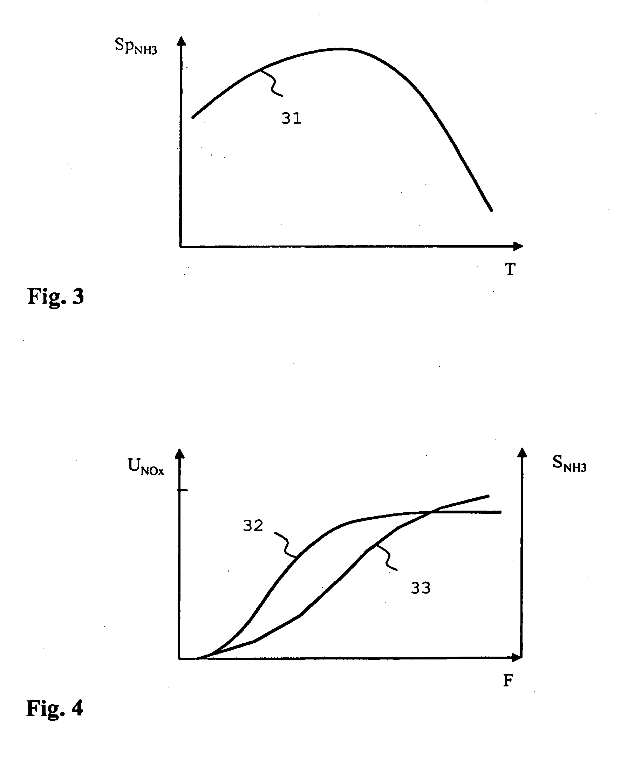

Die NH₃-Füllkapazität ist in erster Linie temperaturabhängig, was durch das in Fig. 3 dargestellte Diagramm wiedergegeben ist. Dabei stellt die Spur 31 einen typischen Verlauf der temperaturabhängigen NH₃-Füllkapazität Sp_{NH3} (T) dar. Die NH₃-Füllkapazität Sp_{NH3} (T) ist, wie dem Diagramm der Fig. 3 zu entnehmen ist, bei niedrigen Temperaturen T vergleichsweise groß und nimmt bei hohen Temperaturen T, etwa oberhalb 300 °C ab. Außerdem besteht eine Abhängigkeit vom Gasdurchsatz, was nicht näher dargestellt ist.

Der NH₃-Füllstand des SCR-Katalysators 5 kann absolut als gespeicherte NH₃-Menge oder als Bruchteil der unter den jeweiligen Bedingungen maximal speicherbaren NH₃-Menge, d.h. der NH₃-Füllkapazität Sp_{NH3} angegeben werden.

Ein wichtiger Aspekt im Zusammenhang mit den Eigenschaften des SCR-Katalysators 5 betrifft die Abhängigkeit des NOx-Umsatzes vom NH₃-Füllstand. In Fig. 4 ist durch die Spur 32 diese Abhängigkeit schematisch dargestellt. Im Vergleich hierzu ist durch die Spur 33 die Abhängigkeit des NH₃-Schlupfes S_{NH3} vom NH₃-Füllstand wiedergegeben. Mit zunehmendem NH₃-Füllstand F steigt dabei der NOx-Umsatz U_{NOx} (F) mit flacher werdender Steigung kontinuierlich bis zu einem Maximalwert an, der im wesentlichen vom Gasdurchsatz und von der Temperatur bestimmt ist. Dies bedeutet, dass ab einem bestimmten Wert für den NH₃-Füllstand F der NOx-Umsatz U_{NOx} durch eine weitere Einspeicherung von NH₃ im Katalysator nicht mehr gesteigert werden kann. Vielmehr erhöht sich, wie durch die Spur 33 dargestellt, der NH₃-Schlupf S_{NH3}. Bei der Einstellung eines für die jeweiligen Bedingungen optimalen Werts für den NH₃-Füllstand F ist die Berücksichtigung dieser Tatbestände von Bedeutung.

Die in den Figuren 2 bis 4 schematisch dargestellten Abhängigkeiten werden zweckmäßigerweise für den eingesetzten SCR-Katalysator 5 vorab ermittelt und als Kennlinien bzw. Kennfelder abgelegt. Auf diese kann die Steuereinheit zugreifen, so dass der Zustand des SCR-Katalysators 5 für jeden Betriebszustand umfassend ermittelbar ist.

Kern der Erfindung ist eine Festlegung einer Dosierrate für die Harnstofflösung derart, dass ein möglichst hoher, zumindest jedoch ein den Anforderungen entsprechender NOx-Umsatz durch den SCR-Katalysator 5 ermöglicht ist. Erfindungsgemäß ist dabei eine Adaption einer von einem entsprechenden Rechenmodell ermittelten Modell-Dosierrate und eines NH₃-Füllstandwerts des SCR-Katalysators 5 vorgesehen. Das Rechenmodell ist bevorzugt als Programm in der Steuereinheit gespeichert. Nachfolgend wird auf wesentliche Bestandteile des Rechenmodells eingegangen.

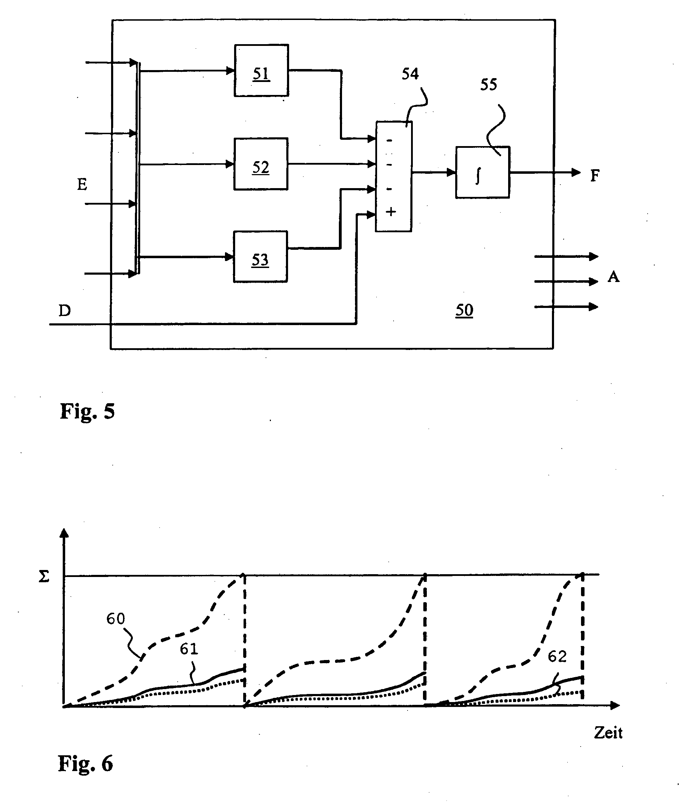

Ein wesentlicher Bestandteil des Rechenmodells ist ein in Fig. 5 schematisch dargestellter Füllstands-Berechnungsblock 50 zur Ermittlung des NH₃-Füllstands des SCR-Katalysators 5. Dem Füllstands-Berechnungsblock 50 werden verschiedene Eingabegrößen E zugeführt, welche Abgaszustandsgrößen wie die Abgastemperatur, Abgasmassenstrom und den NOx-Gehalt des in den SCR-Katalysator 5 einströmenden Abgases betreffen. Letzterer kann messtechnisch oder aus hinterlegten Motorbetriebskennfeldern ermittelt sein. Die Eingabegrößen E können gegebenenfalls weitere Größen umfassen.

Der Füllstands-Berechnungsblock 50 kann auf in Fig. 5 exemplarisch mit 51, 52, 53 bezeichnete Kennfeldsätze insbesondere betreffend einen NH₃-Verlust bzw. -Verbrauch von im SCR-Katalysator 5 gespeichertem und/oder ihm zugeführtem NH₃ zugreifen. Diese Kennfeldsätze 51, 52, 53 betreffen beispielsweise den NOx-Umsatz U_{NOx}, eine Direktumsetzung mit Sauerstoff und eine Desorptionsrate. Eine Berücksichtigung von Reduktionsmittelverlusten durch Wandablagerung in der Abgasleitung 2, unvollständiger Aufbereitung und dergleichen kann vorgesehen sein. Dabei werden die maßgeblichen Daten entsprechend den vorliegenden Eingabegrößen E bestimmt. Die Werte betreffend den NH₃-Verlust werden zusammen mit einer Modell-Dosierrate D einem Summationsabschnitt 54 zugeführt, welches die betreffenden Größen vorzeichenrichtig summiert. Auf diese Weise ist eine Bilanzierung für die Größen ermöglicht, welche die im SCR-Katalysator 5 gespeicherte NH₃-Menge im Wesentlichen bestimmen. Der von Summationsabschnitt 54 ermittelte Summenwert wird einem Integrationsabschnitt 55 zugeführt, dessen Ausgangsgröße ein NH₃-Füllstandswert F ist, der den aktuellen NH₃-Füllstand des SCR-Katalysators 5 repräsentiert. Daneben werden aus den vorliegenden Daten weitere Ausgangsgrößen A ermittelt. Dies sind beispielsweise modellierte Werte für den NOx-Gehalt des aus dem SCR-Katalysator 5 ausströmenden Abgases und den NH₃-Schlupf S_{NH3}.

Als weiteren Berechnungsblock umfasst das Rechenmodell einen nicht dargestellten Wirkungsgrad-Berechnungsblock, der einen von einer oder mehreren der Eingangsgrößen E und/oder der Ausgangsgrößen A abhängigen Soll-Wirkungsgrad für einen NOx-Umsatz U_{NOx} mit im SCR-Katalysator 5 gespeichertem und/oder zugeführtem NH₃ ermittelt. Im Wirkungsgrad-Berechnungsblock ist bevorzugt ein Einfluss einer gegebenenfalls vorhandenen Passivierung des SCR-Katalysators 5 berücksichtigt. Eine solche Passivierung kann insbesondere durch dem SCR-Katalysator 5 zugeführte und auf katalytisch aktiven Zentren adsorbierte Kohlenwasserstoffe (HC) verursacht sein. Zur Berücksichtigung einer Passivierung durch adsorbierte Kohlenwasserstoffe wird bevorzugt auf ein Motorkennfeld betreffend eine HC-Emission des Dieselmotors 1, ein Kennfeld betreffend einen HC-Umsatz von Oxidationskatalysator 3 und/oder Partikelfilter 4 sowie HC-Adsorptions- und/Desorptionskennlinien des SCR-Katalysators 5 zurückgegriffen.

Aus dem ermittelten NH₃-Füllstandswert F, dem Soll-Füllstand und/oder dem Soll-Wirkungsgrad wird die Modell-Dosierrate D errechnet. Dabei ist es bevorzugt, wenn eine Differenz von ermitteltem NH₃-Füllstandswert F und Soll-Füllstand in Art einer feed-back-Regelung zur Berechnung der Modell-Dosierrate D zurückgeführt und somit eine modellbasierte NH₃-Füllstandsregelung durchgeführt wird. Dabei kann vorgesehen sein, für den Soll-Füllstand ein durch einen jeweils vorgebbaren unteren und oberen Schwellenwert definiertes Band vorzugeben. Die Schwellenwerte bzw. der Soll-Füllstand werden bevorzugt so vorgegeben, dass ein zugeordneter vorgebbarer NOₓ-Umsatz U_{NOx} und/oder ein zugeordneter vorgebbarer NH₃-Schlupf S_{NH3} resultieren.

Obschon durch das Rechenmodell weitgehend zuverlässig ein angestrebter hoher NOx-Umsatz U_{NOx} des SCR-Katalysators 5 erzielbar ist, ist eine messtechnische Kontrolle der hinter dem SCR-Katalysator 5 vorhandenen Reinemission vorteilhaft und erfindungsgemäß vorgesehen. Werden beispielsweise durch den Abgassensor 25 unerwünschte Abweichungen vom modellierten angestrebten Ergebnis festgestellt, so wird auf das Rechenmodell bzw. dessen Eingangsgrößen korrigierend eingewirkt. Insbesondere ist bei entsprechenden Abweichungen erfindungsgemäß eine adaptive Korrektur von Modell-Dosierrate D und/oder NH₃-Füllstandswert F vorgesehen. Dabei kann eine messtechnische Ermittlung der NH₃-Emission und der NOx-Emission ausgangsseitig des SCR-Katalysators 5 mit getrennten, jeweils lediglich für NH₃ bzw. NOx empfindlichen Abgassensoren 25 vorgesehen sein.

Überschreitet ein messtechnisch ermittelter Wert für eine NH₃-Emission ausgangsseitig des SCR-Katalysators 5 einen korrespondierenden, vom Rechenmodell ermittelten Schätzwert um ein vorgebbares Maß, so zeigt dies eine vom Rechenmodell fälschlich zu hoch errechnete Modell-Dosierrate D an. In diesem Fall wird bevorzugt die Modell-Dosierrate D durch Multiplikation mit einem Langzeitadaptionsfaktor derart korrigiert, dass eine gegenüber der Modell-Dosierrate D erniedrigte Soll-Dosierrate erhalten wird, mit welcher die Dosiereinheit 27 zur Abgabe des Reduktionsmittels angesteuert wird. Überschreitet hingegen ein messtechnisch ermittelter Wert für eine NOx-Emission ausgangsseitig des SCR-Katalysators 5 einen korrespondierenden, vom Rechenmodell ermittelten Schätzwert um ein vorgebbares Maß, so zeigt dies eine vom Rechenmodell fälschlich zu niedrig errechnete Modell-Dosierrate D an. In diesem Fall wird bevorzugt die Modell-Dosierrate D durch Multiplikation mit dem Langzeitadaptionsfaktor derart korrigiert, dass eine gegenüber der Modell-Dosierrate D erhöhte Soll-Dosierrate erhalten wird, mit welcher die Dosiereinheit 27 zur Abgabe des Reduktionsmittels angesteuert wird. Dabei ist bevorzugt vorgesehen, von vornherein eine Multiplikation der Modell-Dosierrate D mit dem Langzeitzeitadaptionsfaktor vorzusehen und im Falle einer notwendigen Korrektur den Langzeitadaptionsfaktor um eine vorgebbare Schrittweite zu erniedrigen bzw. zu erhöhen. Bei einer ersten Inbetriebnahme der Abgasreinigungsanlage ist bevorzugt der Langzeitadaptionsfaktor mit dem Wert 1,0 vorbelegt.

Erfindungsgemäß ist zudem für den Fall, dass ein messtechnisch ermittelter Wert für eine NOx-Emission ausgangsseitig des SCR-Katalysators 5 einen korrespondierenden, vom Rechenmodell ermittelten Schätzwert um ein vorgebbares Maß unterschreitet, eine Korrektur des vom Rechenmodell ermittelten NH₃-Füllstandswert F vorzunehmen. Vorgesehen ist eine Multiplikation des NH₃-Füllstandswerts F mit einem Kurzeitadaptionsfaktor derart, dass ein gegenüber dem NH₃-Füllstandswert F erhöhter angenommener NH₃-Ist-Füllstand erhalten wird, mit welchem die weiteren Berechnungen des Rechenmodells durchgeführt werden. Das Ausmaß der Erhöhung bzw. der Betrag des Kurzzeitadaptionsfaktors wird dabei bevorzugt in Abhängigkeit vom Ausmaß der festgestellten Abweichung vorgebbar festgelegt.

Vorzugsweise ist es vorgesehen, zur Ermittlung von Abweichungen der messtechnisch ermittelten Emissionswerte von den vom Rechenmodell ermittelten Werten laufend Integrationen über aufeinander folgende Integrationszyklen vorgebbarer Länge vorzunehmen und die erhaltenen Summenwerte zu vergleichen. Bevorzugt wird aus den Summenwerten ein quantitativer Adaptionskennwert ermittelt, der zyklisch auf das Erfüllen eines vorbestimmten Kurzeit- und/oder Langzeitadaptionskriteriums ausgewertet wird. Nachfolgend wird diese Vorgehensweise eingehender für den Fall erläutert, dass ein sowohl gegenüber NOx als auch gleichzeitig gegenüber NH₃ empfindlicher Abgassensor 25 verwendet wird. Durch Einsatz eines derart ausgebildeten Abgassensors 25 kann ein Sensor eingespart werden, wobei jedoch besonderes Augenmerk auf die richtige Interpretation des Sensorsignals gelegt werden muss. Durch die nachfolgend erläuterte bevorzugte Vorgehensweise werden Fehlinterpretationen vermieden.

Zur Erläuterung der bevorzugten Vorgehensweise zur Ermittlung des für die Durchführung einer Langzeit- oder Kurzzeitadaption maßgebenden Adaptionskennwerts wird zunächst Bezug auf Fig. 6 genommen. Darin sind beispielhaft in drei aufeinander folgenden Integrationszyklen erhaltene Verläufe von aufintegrierten Emissionswerten dargestellt. Eine mit der Kennziffer 60 gekennzeichnete Spur gibt dabei den aufintegrierten Verlauf der in den SCR-Katalysator 5 einströmenden NOx-Menge wieder. Entsprechend korrespondiert Spur 61 mit einer messtechnisch mittels des gegenüber NH₃ und NOx empfindlichen Abgassensors 25 ermittelten ausströmenden NOx-Menge. Spur 62 gibt die korrespondierende, durch das Rechenmodell errechnete bzw. geschätzte ausströmende NOx-Menge wieder.

Die Länge eines jeweiligen Integrationszyklus kann durch eine vorgebbare feste Zeitspanne bestimmt sein. Vorliegend ist die Länge eines Integrationszyklus jedoch an das Erreichen eines vorgebbaren Summenwerts Σ für die in den SCR-Katalysator 5 einströmende aufintegrierte NOx-Menge gemäß Spur 60, nachfolgend als NOx-Rohemissionswert NOxᵢₙ bezeichnet, geknüpft. Je nach Art des Dieselmotors 1 wird der Summenwert Σ in einem bevorzugten Bereich von 0,1 g NOx bis 1,0 g NOx, berechnet als NO, vorgegeben. Der im Integrationszyklus mit der solcherart festgelegten Länge erhaltene integrale Emissionswert für die gemessene NOx-Menge ausgangsseitig des SCR-Katalysators 5 (Spur 61) wird nachfolgend als NOx-Reinemissions-Messwert NOxₒᵤₜₘₑₛ bezeichnet. Analog wird der vom Rechenmodell errechnete integrale Wert (Spur 62) am Integrationszyklusende als NOx-Reinemissions-Schätzwert NOx_{outcalc} bezeichnet.

Der zur Durchführung einer Langzeit- und/oder Kurzzeitadaption maßgebende Adaptionskennwert K wird nun bevorzugt durch die Beziehung

K = (NOxₒᵤₜₘₑₛ - NOx_{outcalc}) : NOxᵢₙ

ermittelt. Für eine weitere Auswertung ist es bevorzugt, einen Mittelwert für den Adaptionskennwert K für mehrere aufeinander folgende Integrationszyklen zu ermitteln. Dadurch wird eine verbesserte statistische Sicherheit erzielt.

Zur Auswertung des Adaptionskennwerts K in Bezug auf das Vorliegen des für eine vorzunehmende Langzeit- oder Kurzzeitadaption maßgebenden Langzeit- oder Kurzzeitadaptionskriteriums wird geprüft, ob der Adaptionskennwert K oberhalb eines vorgebbaren oberen Schwellenwerts bzw. unterhalb eines vorgebbaren unteren Schwellenwertes liegt. Liegt der Adaptionskennwert innerhalb eines Bereichs zwischen oberem und unterem Schwellenwert, so wird davon ausgegangen, dass das Rechenmodell zufrieden stellend arbeitet und es wird mit der zyklischen Ermittlung von Adaptionskennwerten fortgefahren, ohne dass eine Adaption vorgenommen wird.

Liegt der Adaptionskennwert K unterhalb des unteren Schwellenwertes von beispielsweise -0,04, so ist der Reinemissions-Messwert NOxₒᵤₜₘₑₛ um ein als unzulässig definiertes Maß kleiner als aufgrund der Modellierung zu erwarten war. Es wird in diesem Fall davon ausgegangen, dass der tatsächliche NH₃-Füllstand des SCR-Katalysators 5 eine kritische Höhe erreicht hat, bzw. den vom Rechenmodell ermittelten NH₃-Füllstandswert F unzulässig übersteigt und das Kurzzeitadaptionskriterium wird als erfüllt angesehen. Es wird in diesem Fall eine Kurzzeitadaption dadurch vorgenommen, dass der vom Rechenmodell ermittelte NH₃-Füllstandswert F durch Multiplikation mit einem Kurzzeitadaptionsfaktor > 1,0 erhöht wird. Die Größe des Kurzzeitadaptionsfaktors wird dabei bevorzugt aus einem Kennfeld oder einer Kennlinie für eine Abhängigkeit von NOx-Umsatz und NH₃-Füllstand analog dem in Fig. 4 dargestellten Diagramm derart ermittelt, dass der zum angenommenen Ist-Füllstand korrigierte NH₃-Füllstandswert F zum NOx-Reinemissions-Messwert NOxₒᵤₜₘₑₛ passt. Vorzugsweise nach Ablauf einer vorgebbaren Sperrzeit, in welcher Einschwingvorgänge abklingen können, wird mit der weiteren zyklischen Ermittlung bzw. Auswertung von Adaptionskennwerten K fortgefahren. Bei der weiteren Berechnung geht das Rechenmodell zur Berechnung der Modell-Dosierrate D von einem entsprechend der Korrektur gegenüber dem zunächst ermittelten NH₃-Füllstandswert F korrigierten höheren angenommenen Ist-Füllstand aus.

Werden innerhalb einer vorgebbaren Zeitspanne von beispielsweise 5 min bis 10 min mehr als eine vorgebbare Anzahl von Kurzzeitadaptionen erforderlich, so wird von einer andauernden Überdosierung ausgegangen und es erfolgt bevorzugt eine Langzeitadaption derart, dass die vom Rechenmodell ermittelte Modell-Dosierrate D mit einem um eine vorgebbare Schrittweite verringerten Langzeitadaptionsfaktor multipliziert wird.

Ergibt die Auswertung des Adaptionskennwertes K, dass dieser oberhalb des oberen Schwellenwertes von beispielsweise 0,1 liegt, so wurde vom Abgassensor 25 eine im Vergleich zu den Berechnungen des Rechenmodells unzulässig erhöhte Reinemission gemessen. Damit wird das Langzeitadaptionskriterium als erfüllt angesehen und es ist eine Veränderung des Langzeitadaptionsfaktors vorgesehen. Im Fall eines sowohl gegenüber NOx als auch NH₃ empfindlichen Abgassensors 25 ist jedoch zunächst im direkten Anschluss an die Ermittlung des oberhalb des oberen Schwellenwertes liegenden Adaptionskennwertes K eine Entscheidungsprozedur vorgesehen. In dieser wird entschieden, ob das vom Abgassensor 25 gelieferte Signal als auf NOx oder als auf NH₃ beruhend anzusehen ist. Nachfolgend wird die Entscheidungsprozedur näher erläutert.

Als erster Schritt der Entscheidungsprozedur wird die Dosiereinheit 27 zur Abgabe eines Dosierimpulses mit einer kurzzeitig und impulsähnlich über das normale Maß hinaus erhöhten Dosierrate des Reduktionsmittels angesteuert. Der Dosierimpuls ist bevorzugt in der Art eines DT1-Glieds ausgebildet. Dabei wird die Amplitude des DT1-Dosierimpulses bevorzugt entsprechend einer NH₃-Dosierrate im Bereich von 5 mg NH₃/s bis 20 mg NH₃/s gewählt. Als Zeitkonstante wird eine Abklingzeit des DT1-Dosierimpulses von vorzugsweise 5 s bis 60 s gewählt. Dabei dient bevorzugt der Beginn des Dosierimpulses als Auslösetrigger für den Start eines Integrationszyklus zur Ermittlung des NOx-Rohemissionswertes NOxᵢₙ, des NOx-Reinemissions-Messwertes NOxₒᵤₜₘₑₛ und des NOx-Reinemissions-Schätzwertes NOx_{outcalc}, mit anschließender Berechnung des Adaptionskennwertes K entsprechend den vorstehenden Erläuterungen. Es ist dabei bevorzugt, den die Dauer des Integrationszyklus bestimmenden Summenwert Σ gegenüber der normalen Einstellung herabzusetzen, damit der Adaptionskennwert K rascher zur Verfügung steht.

Wird infolge der kurzzeitig und impulsähnlich erhöhten Dosierrate nunmehr ein gegenüber dem vorherigen Wert verringerter Adaptionskennwert K, insbesondere ein nunmehr unterhalb des oberen Schwellenwertes liegender Adaptionskennwert K ermittelt, so deutet dies auf eine vor der Entscheidungsprozedur vorhandene Unterdosierung hin und der vom Abgassensor 25 gelieferte Messwert bzw. der NOx-Reinemissions-Messwert NOxₒᵤₜₘₑₛ wird als tatsächlich auf NOx beruhend interpretiert. Als Reaktion auf diese Entscheidung wird der Langzeitadaptionsfaktor, mit welchem die Modell-Dosierrate D multipliziert wird, um eine vorgebbare Schrittweite erhöht und die Dosiereinheit 27 zur Abgabe der entsprechend zur Soll-Dosierrate korrigierten Modell-Dosierrate D angesteuert. Anschließend wird, bevorzugt nach einer vorgebbaren Sperrzeit, die fortlaufende Ermittlung von Adaptionskennwerten K wieder aufgenommen.

Wird im Anschluss an die kurzzeitig und impulsähnlich erhöhten Dosierrate nunmehr ein weiter erhöhter, über dem oberen Schwellenwert liegender Adaptionskennwert K ermittelt, so deutet dies auf eine vor der Entscheidungsprozedur vorhandene Überdosierung hin und der vom Abgassensor 25 gelieferte Messwert bzw. der NOx-Reinemissions-Messwert NOxₒᵤₜₘₑₛ wird als auf NH₃ beruhend interpretiert. Als Reaktion auf diese Entscheidung wird der Langzeitadaptionsfaktor, mit welchem die Modell-Dosierrate D multipliziert wird, um eine vorgebbare Schrittweite verringert und die Dosiereinheit 27 zur Abgabe der entsprechend zur Soll-Dosierrate korrigierten Modell-Dosierrate D angesteuert. Anschließend wird, bevorzugt nach einer vorgebbaren Sperrzeit, die fortlaufende Ermittlung von Adaptionskennwerten wieder aufgenommen. Zusätzlich ist es vorzugsweise vorgesehen, insbesondere noch vor der Verringerung des Langzeitadaptionsfaktors, eine Abgasrückführrate für eine kurze, vorgebbare Zeitspanne zu verringern oder durch Schließen des Abgasrückführventils auf Null zu setzen. Auf diese Weise wird die NOx-Rohemission des Dieselmotors 1 kurzzeitig über den normalen Wert hinaus erhöht. Damit werden durch den Dosierimpuls dem SCR-Katalysator 5 zusätzlich zugeführtes NH₃ sowie ein erhöhter NH₃-Füllstand rasch abgebaut und einem unerwünscht hohen NH3-Schlupf vorgebeugt.

Insbesondere bei hohen Temperaturen des SCR-Katalysators 5 ist die NH₃-Füllkapazität Sp_{NH3} des SCR-Katalysators 5 niedrig, wie im Diagramm von Fig. 3 dargestellt. Dies kann zu unerwünschten Ungenauigkeiten bei einer auf den NH₃-Füllstand abgestellten modellbasierten NH₃-Füllstandsregelung führen. Zur Lösung dieses Problems ist es erfindungsgemäß vorgesehen, dass bei Unterschreiten eines vorgebbaren Schwellenwertes für die NH₃-Füllkapazität Sp_{NH3} des SCR-Katalysators 5 vom Rechenmodell eine Modell-Dosierrate D ermittelt wird, mit welcher ein vorgebbarer Soll-Wirkungsgrad des SCR-Katalysators 5 für den NOx-Umsatz U_{NOx} wenigstens annähernd erreicht wird. Bevorzugt wird ein Soll-Wirkungsgrad von etwa 80 % des bei den aktuellen Bedingungen als maximal möglich ermittelten Maximal-Wirkungsgrads vorgegeben. Dadurch wird einerseits ein NH₃-Schlupf zuverlässig vermieden, andererseits wird erreicht, dass der NOx-Umsatz U_{NOx} ausschließlich oder zumindest überwiegend mit dem SCR-Katalysator 5 unmittelbar zugeführtem NH₃ erfolgt.

Mit diesen Einstellungen ist sichergestellt, dass der vom Abgassensor 25 gelieferte Messwert bzw. der NOx-Reinemissions-Messwert NOxₒᵤₜₘₑₛ in einem Integrationszyklus tatsächlich auf NOx beruht. Ergibt in diesem Fall die Auswertung des Adaptionskennwertes K, dass dieser oberhalb des oberen Schwellenwertes von beispielsweise 0,1 liegt, wird das Langzeitadaptionskriterium als erfüllt angesehen, da vom Abgassensor 25 ein im Vergleich zu den Berechnungen des Rechenmodells unzulässig erhöhter NOx-Reinemissions-Messwert NOxₒᵤₜₘₑₛ gemessen wurde, was auf eine entsprechend zu niedrig eingestellte Soll-Dosierrate schließen lässt. Als Reaktion darauf wird eine Erhöhung des Langzeitadaptionsfaktors K vorgenommen. Die Erhöhung des Langzeitadaptionsfaktors K wird dabei so festgelegt, dass sich mit einer entsprechend korrigierten Modell-Dosierrate D im zurückliegenden Integrationszyklus ein NOx-Reinemissions-Schätzwert NOx_{outcalc}, ergeben hätte, der einen Adaptionskennwert K von Null oder annähernd Null zu Folge gehabt hätte.

Insgesamt ist somit mit der erfindungsgemäßen Vorgehensweise sichergestellt, dass in einem sehr weiten Betriebsbereich der Abgasreinigungsanlage eine optimale Dosierrate für das Reduktionsmittel und damit eine optimale Stickoxidverminderung erzielt wird.

## Patentansprüche

1. Verfahren zum Betreiben einer Abgasreinigungsanlage mit einem SCR-Katalysator (5) zur Reinigung eines Abgases eines Kraftfahrzeug-Verbrennungsmotors (1), bei welchem von einer durch eine Steuereinheit ansteuerbaren Dosiereinheit (27) ein Ammoniak enthaltendes Reduktionsmittel dem Abgas zudosiert wird und dem SCR-Katalysator (5) ein entsprechend der Zudosierung mit Ammoniak angereichertes Abgas zugeführt wird, wobei durch ein Rechenmodell berechnet werden
- ein Ammoniak-Füllstandswert (F) für einen Füllstand von im SCR-Katalysator (5) gespeichertem Ammoniak und
- eine Modell-Dosierrate (D) für die Zudosierung des Reduktionsmittels ins Abgas, mit der ein durch das Rechenmodell vorgegebener Soll-Füllstand von im SCR-Katalysator (5) gespeichertem Ammoniak und/oder ein durch das Rechenmodell vorgegebener Soll-Wirkungsgrad für einen Stickoxid-Umsatz (U_{NOx}) mit im SCR-Katalysator (5) gespeichertem und/oder dem SCR-Katalysator (5) zugeführtem Ammoniak wenigstens annähernd erreicht werden,
wobei
- für die Modell-Dosierrate (D) eine Korrektur durch einen veränderbaren Langzeitadaptionsfaktor zu einer Soll-Dosierrate vorgesehen ist,
- für den Ammoniak-Füllstandswert (F) eine Korrektur durch einen veränderbaren Kurzzeitadaptionsfaktor zu einem angenommenen Ist-Füllstand vorgesehen ist, und
- die Dosiereinheit (27) zur Abgabe der Soll-Dosierrate angesteuert wird,
**dadurch gekennzeichnet, dass**
durch Integration in aufeinander folgenden Integrationszyklen vorgebbarer Länge jeweils parallel ein Stickoxid-Rohemissionswert (NOxᵢₙ), ein Stickoxid-Reinemissions-Schätzwert (NOx_{outcalc}) und ein Stickoxid-Reinemissions-Messwert (NOxₒᵤₜₘₑₛ) und ferner als Adaptionskennwert (K) eine auf den Stickoxid-Rohemissionswert (NOxᵢₙ) bezogene Differenz von Stickoxid-Reinemissions-Messwert (NOxₒᵤₜₘₑₛ) und Stickoxid-Reinemissions-Schätzwert (NOx_{outcalc}) ermittelt werden, wobei der Adaptionskennwert (K) zur Beurteilung einer Notwendigkeit einer Langzeit- und/oder Kurzzeitadaption herangezogen wird.

2. Verfahren nach Anspruch 1,
**dadurch gekennzeichnet dass**
laufend Stickoxid- und/oder Ammoniak-Emissionswerte des Abgases ermittelt werden und die Stickoxid- und/oder Ammoniak-Emissionswerte in Bezug auf das Erfüllen eines vorbestimmten Kurzzeitadaptionskriteriums und/oder eines Langzeitadaptionskriteriums zyklisch ausgewertet werden.

3. Verfahren nach Anspruch 1 oder 2,
**dadurch gekennzeichnet dass**
- der Stickoxid-Rohemissionswert (NOxᵢₙ) durch Integration eines Stickoxid-Gehalts im Abgas eingangsseitig des SCR-Katalysators (5),
- der Stickoxid-Reinemissions-Schätzwert (NOx_{outcalc}) durch Integration eines durch das Rechenmodell berechneten Stickoxid-Gehalts im Abgas ausgangsseitig des SCR-Katalysators (5) und
- der Stickoxid-Reinemissions-Messwert (NOxₒᵤₜₘₑₛ) durch Integration eines aus einem Signal eines ausgangsseitig des SCR-Katalysators (5) angeordneten Stickoxid-Sensors (25) abgeleiteten Stickoxid-Gehalts im Abgas ausgangsseitig des SCR-Katalysators (5)
ermittelt werden.

4. Verfahren nach Anspruch 2 oder 3,
**dadurch gekennzeichnet dass**
das Langzeitadaptionskriterium als erfüllt angesehen wird, wenn der Adaptionskennwert (K) einen vorgebbaren oberen Schwellenwert überschreitet.

5. Verfahren nach einem der Ansprüche 2 bis 4,
**dadurch gekennzeichnet, dass**
das Kurzzeitadaptionskriterium als erfüllt angesehen wird, wenn der Adaptionskennwert (K) einen vorgebbaren unteren Schwellenwert unterschreitet.

6. Verfahren nach einem der Ansprüche 2 bis 5,
**dadurch gekennzeichnet, dass**
bei erfülltem Langzeitadaptionskriterium der Langzeitadaptionsfaktor um einen vorgebbaren Betrag verändert wird und bei erfülltem Kurzzeitadaptionskriterium der Kurzeitadaptionsfaktor um einen vorgebbaren Betrag verändert wird.

7. Verfahren nach einem der Ansprüche 1 bis 6,
**dadurch gekennzeichnet dass**
messtechnisch ein Wert für eine Ammoniakemission ausgangsseitig des SCR-Katalysators (5) ermittelt wird und für den Fall, dass dieser Wert einen vom Rechenmodell ermittelten korrespondierenden Schätzwert um ein vorgebbares Maß überschreitet, eine die aktuelle Dosierrate vermindernde Korrektur der Modell-Dosierrate (D) durch den Langzeitadaptionsfaktor vorgenommen wird.

8. Verfahren nach einem der Ansprüche 1 bis 7,
**dadurch gekennzeichnet dass**
messtechnisch ein Wert für eine Stickoxidemission ausgangsseitig des SCR-Katalysators (5) ermittelt wird und für den Fall, dass dieser Wert einen vom Rechenmodell ermittelten korrespondierenden Schätzwert um ein vorgebbares Maß überschreitet, eine die aktuelle Dosierrate erhöhende Korrektur der Modell-Dosierrate (D) durch den Langzeitadaptionsfaktor vorgenommen wird.

9. Verfahren nach einem der Ansprüche 1 bis 8,
**dadurch gekennzeichnet dass**
messtechnisch ein Wert für eine Stickoxidemission ausgangsseitig des SCR-Katalysators (5) ermittelt wird und für den Fall, dass dieser Wert einen vom Rechenmodell ermittelten korrespondierenden Schätzwert um ein vorgebbares Maß unterschreitet, eine den vom Rechenmodell berechneten Ammoniak-Füllstandswert erhöhende Korrektur durch den Kurzzeitadaptionsfaktor vorgenommen wird.

10. Verfahren nach einem der Ansprüche 1 bis 9,
**dadurch gekennzeichnet, dass**
eine aktuelle Füllkapazität (Sp_{NH3}) für eine aktuell im SCR-Katalysator (5) maximal speicherbare Ammoniak-Menge und ein aktuell möglicher maximaler Wirkungsgrad für einen NOx-Umsatz (U_{NOx}) des SCR-Katalysators (5) ermittelt werden und bei Unterschreiten eines vorgebbaren Schwellenwertes für die aktuelle Füllkapazität (Sp_{NH3}) ein vorgebbarer Bruchteil des aktuell möglichen maximalen Wirkungsgrads als Soll-Wirkungsgrad vorgegeben wird.

11. Verfahren nach Anspruch 10,
**dadurch gekennzeichnet, dass**
der Langzeitadaptionsfaktor derart festgelegt wird, dass der daraus resultierende Stickoxid-Reinemissions-Schätzwert (NOx_{outcalc}) im zurückliegenden Integrationszyklus zu einem Adaptionskennwert (K) von Null oder annähernd Null geführt hätte.

12. Verfahren nach einem der Ansprüche 1 bis 11,
**dadurch gekennzeichnet, dass**
bei der Berechnung des Ammoniak-Füllstandswerts (F) eine Direktumsetzung von Ammoniak mit Sauerstoff berücksichtigt wird.

13. Verfahren nach einem der Ansprüche 1 bis 12,
**dadurch gekennzeichnet, dass**
zur wenigstens annähernden Erreichung des Soll-Füllstands von im SCR-Katalysator (5) gespeichertem Ammoniak eine modellbasierte Ammoniak-Füllstandsregelung durchgeführt wird.

## Claims

1. Method for operating an exhaust gas purification system with an SCR catalytic converter (5) to purify exhaust gas of a motor vehicle internal combustion engine (1), wherein an ammonia-containing reducing agent is metered to the exhaust gas by a metering unit (27) that can be controlled by a control unit and exhaust gas enriched with ammonia corresponding to the metering operation is fed to the SCR catalytic converter (5), wherein a computational model calculates as follows:
- an ammonia filling level value (F) for a filling level of ammonia stored in the SCR catalytic converter (5) and
- a model metering rate (D) for metering the reducing agent into the exhaust gas, with which a target filling level, predefined by the computational model, of ammonia stored in the SCR catalytic converter (5), and / or a target efficiency, predefined by the computational model, for a nitrogen oxide conversion (U_{NOx}) with ammonia stored in the SCR catalytic converter (5) and / or fed to the SCR catalytic converter (5) are at least approximately achieved,
wherein
- a correction by a variable long-term adaptation factor to a target metering rate is provided for the model metering rate (D),
- a correction by a variable short-term adaptation factor to an assumed target filling level is provided for the ammonia filling level value (F), and
- the metering unit (27) is controlled to discharge the target metering rate, **characterised in that**
through integration in successive integration cycles of pre-settable length, a nitrogen oxide raw emission value (NOxᵢₙ), a nitrogen oxide pure emission estimated value (NOx_{outcalc}) and a nitrogen oxide pure emission measurement value (NOxₒᵤₜₘₑₛ) and furthermore, as an adaptation characteristic value (K), a difference relating to the nitrogen oxide raw emission value (NOxᵢₙ) with respect to the nitrogen oxide pure emission measurement value (NOxₒᵤₜₘₑₛ) and the nitrogen oxide pure emission estimated value (NOx_{outcalc}) are determined in parallel, wherein the adaptation characteristic value (K) is used to assess the need for a long-term and / or short term adaptation.

2. Method according to claim 1,
**characterised in that**
nitrogen oxide and / or ammonia emission values of the exhaust gas are determined in an ongoing manner and the nitrogen oxide and / or ammonia emission values are cyclically evaluated in relation to the fulfilling of a predetermined short-term adaptation criterion and / or a long-term adaptation criterion.

3. Method according to claim 1 or 2,
**characterised in that**
- the nitrogen oxide raw emission value (NOxᵢₙ) is determined by integrating a nitrogen oxide content in the exhaust gas at the input side of the SCR catalytic converter (5),
- the nitrogen oxide pure emission estimated value (NOx_{outcalc}) is determined by integrating a nitrogen oxide content in the exhaust gas, calculated by the computational model, at the output side of the SCR catalytic converter (5), and
- the nitrogen oxide pure emission measurement value (NOxₒᵤₜₘₑₛ) is determined by integrating a nitrogen oxide content in the exhaust gas, derived from a signal of a nitrogen oxide sensor (25) arranged at the output side of the SCR catalytic converter (5), at the output side of the SCR catalytic converter (5).

4. Method according to claim 2 or 3,
**characterised in that**
the long-term adaptation criterion is regarded as fulfilled if the adaptation characteristic value (K) exceeds a pre-settable upper threshold value.

5. Method according to one of claims 2 to 4,
**characterised in that**
the short-term adaptation criterion is regarded as fulfilled if the adaptation characteristic value (K) is below a pre-settable lower threshold value.

6. Method according to one of claims 2 to 5,
**characterised in that**
if the long-term adaptation criterion is fulfilled the long-term adaptation factor is changed by a pre-settable amount and if the short-term adaptation criterion is fulfilled the short-term adaptation factor is changed by a pre-settable amount.

7. Method according to one of claims 1 to 6,
**characterised in that**
a value for ammonia emission is determined on the basis of measurement technology at the output side of the SCR catalytic converter (5) and in case this value exceeds a corresponding estimated value determined by the computational model by a pre-settable amount, a correction of the model metering rate (D) reducing the current metering rate by the long-term adaptation factor is carried out.

8. Method according to one of claims 1 to 7,
**characterised in that**
a value for nitrogen oxide emission is determined on the basis of measurement technology at the output side of the SCR catalytic converter (5) and in case this value exceeds a corresponding estimated value determined by the computational model by a pre-settable amount, a correction of the model metering rate (D) increasing the current metering rate by the long-term adaptation factor is carried out.

9. Method according to one of claims 1 to 8,
**characterised in that**
a value for nitrogen oxide emission is determined on the basis of measurement technology at the output side of the SCR catalytic converter (5) and in case this value is below a corresponding estimated value determined by the computational model by a pre-settable amount, a correction increasing the ammonia filling level value calculated by the computational model by the short-term adaptation factor is carried out.

10. Method according to one of claims 1 to 9,
**characterised in that**
a current filling capacity (SP_{NH3}) for a maximum amount of ammonia that can currently be stored in the SCR catalytic converter (5) and a currently maximum possible efficiency for a NOx conversion (U_{NOx}) of the SCR catalytic converter (5) are determined and if a pre-settable threshold value for the current filling capacity (SP_{NH3}) is fallen short of, a pre-settable fraction of the currently possible maximum efficiency is predefined as a target efficiency.

11. Method according to claim 10,
**characterised in that**
the long-term adaptation factor is fixed so that the resulting nitrogen oxide pure emission estimated value (NOx_{outcalc}) resulting therefrom would have led in the further back integration cycle to an adaptation characteristic value (K) of zero or approximately zero.

12. Method according to one of claims 1 to 11,
**characterised in that**
when calculating the ammonia filling level value (F) a direct conversion of ammonia with oxygen is taken into consideration.

13. Method according to one of claims 1 to 12,
**characterised in that**
in order to at least approximately reach the target filling level of ammonia stored in the SCR catalytic converter (5) a model-based ammonia filling level control is carried out.

## Revendications

1. Procédé de fonctionnement d'une installation d'épuration de gaz d'échappement comprenant un catalyseur SCR (5) destiné à épurer un gaz d'échappement émis par un moteur à combustion interne (1) d'un véhicule automobile, selon lequel un agent de réduction contenant un ammoniac est ajouté au gaz d'échappement au moyen d'une unité de dosage (27) commandée par une unité de commande et un gaz d'échappement enrichi en ammoniac conformément à l'ajout est amené au catalyseur SCR (5), un modèle de calcul permettant de calculer une valeur (F) de niveau de remplissage d'ammoniac pour un niveau de remplissage de l'ammoniac stocké dans le catalyseur SCR (5) et un débit (D) de dosage selon le modèle pour l'ajout de l'agent de réduction dans le gaz d'échappement, ledit débit de dosage permettant d'obtenir au moins approximativement un niveau de remplissage théorique prédéfini par le modèle de calcul d'ammoniac stocké dans le catalyseur SCR (5) et/ou un rendement théorique prédéfini par le modèle de calcul pour une conversion d'oxyde d'azote (U_{NOx}) avec l'ammoniac amené dans le catalyseur SCR (5) et/ou stocké dans le catalyseur SCR (5), le débit de dosage (D) selon le modèle pouvant être corrigé par un facteur variable d'adaptation à long terme pour obtenir un débit de dosage théorique, la valeur de niveau de remplissage d'ammoniac (F) pouvant être corrigée par un facteur variable d'adaptation à court terme pour obtenir un niveau de remplissage réel présumé, et l'unité de dosage (27) destinée à délivrer le débit de dosage théorique étant activée, **caractérisé en ce que** par l'intégration dans des cycles d'intégration successifs de longueur prédéfinie sont définies en parallèle, une valeur d'émission brute d'oxyde d'azote (NOxᵢₙ), une valeur estimée d'émission pure d'oxyde d'azote (NOx_{outcalc}) et une valeur mesurée d'émission pure d'oxyde d'azote (NOxₒᵤₜₘₑₛ)et en outre en tant que valeur caractéristique d'adaptation (K) une différence relative à la valeur d'émission brute d'oxyde d'azote (NOxᵢₙ) entre la valeur mesurée d'émission pure d'oxyde d'azote (NOxₒᵤₜₘₑₛ) et la valeur d'estimation d'émission pure d'oxyde d'azote (NOx_{outcalc}), faisant appel à la valeur caractéristique d'adaptation (K) pour évaluer une nécessité d'une adaptation à court terme et/ou à long terme.

2. Procédé selon la revendication 1, **caractérisé en ce que** des valeurs d'émission d'ammoniac et/ou d'oxyde d'azote du gaz d'échappement sont déterminées en continu et les valeurs d'émission d'ammoniac et/ou d'oxyde d'azote sont évaluées de manière cyclique pour ce qui est de répondre à un critère prédéterminé d'adaptation à court terme et/ou d'un critère d'adaptation à long terme.

3. Procédé selon la revendication 1 ou la revendication 2, **caractérisé en ce que** sont déterminées la valeur d'émission brute d'oxyde d'azote (NOxᵢₙ) par l'intégration d'une teneur en oxyde d'azote dans le gaz d'échappement côté entrée du catalyseur SCR (5), la valeur estimée d'émission pure d'oxyde d'azote (NOx_{outcalc}) par intégration d'une teneur en oxyde d'azote calculée à l'aide du modèle de calcul dans le gaz d'échappement côté sortie du catalyseur SCR (5) et la valeur mesurée d'émission pure d'oxyde d'azote (NOxₒᵤₜₘₑₛ) par l'intégration d'une teneur en oxyde d'azote déduite à partir d'un signal d'un capteur d'oxyde d'azote (25) disposé côté sortie d'un catalyseur SCR (5) dans le gaz d'échappement côté sortie du catalyseur SCR (5).

4. Procédé selon la revendication 2 ou la revendication 3, **caractérisé en ce que** le critère d'adaptation à long terme est considéré comme rempli lorsque la valeur caractéristique d'adaptation (K) est supérieure à une valeur seuil supérieure prédéfinie.

5. Procédé selon l'une quelconque des revendications 2 à 4, **caractérisé en ce que** le critère d'adaptation à court terme est considéré comme rempli lorsque la valeur caractéristique d'adaptation (K) est inférieure à une valeur seuil inférieure prédéfinie.

6. Procédé selon l'une quelconque des revendications 2 à 5, **caractérisé en ce que** lorsque le critère d'adaptation à long terme est rempli, le facteur d'adaptation à long terme est modifié selon une valeur prédéfinie et lorsque le critère d'adaptation à court terme est rempli, le facteur d'adaptation à court terme est modifié selon une valeur prédéfinie.

7. Procédé selon l'une quelconque des revendications 1 à 6, **caractérisé en ce que** d'un point de vue métrologique une valeur pour une émission d'ammoniac côté sortie du catalyseur SCR (5) est déterminée et si ladite valeur est inférieure à une valeur estimée correspondante déterminée par le modèle de calcul à hauteur d'une valeur prédéfinie, une correction réduisant le débit de dosage réel du débit de dosage selon le modèle (D) est réalisée par le facteur d'adaptation à long terme.

8. Procédé selon l'une quelconque des revendications 1 à 7, **caractérisé en ce que** d'un point de vue métrologique une valeur pour une émission d'oxyde d'azote côté sortie du catalyseur SCR (5) est déterminée et si ladite valeur est inférieure à une valeur estimée correspondante déterminée par le modèle de calcul à hauteur d'une valeur prédéfinie, une correction augmentant le débit de dosage réel du débit de dosage selon le modèle (D) est réalisée par le facteur d'adaptation à long terme.

9. Procédé selon l'une quelconque des revendications 1 à 8, **caractérisé en ce que** d'un point de vue métrologique une valeur pour une émission d'oxyde d'azote côté sortie du catalyseur SCR (5) est déterminée et si ladite valeur est inférieure à une valeur estimée correspondante déterminée par le modèle de calcul à hauteur d'une valeur prédéfinie, une correction augmentant la valeur de remplissage d'ammoniac calculé par le modèle de calcul (D) est réalisée par le facteur d'adaptation à court terme.

10. Procédé selon l'une quelconque des revendications 1 à 9, **caractérisé en ce qu'**une capacité de remplissage réelle (Sp_{NH3}) pour une quantité d'ammoniac pouvant être stockée réellement au maximum dans le catalyseur SCR (5) et un rendement maximal réellement possible pour une conversion de NOx (Uₙₒₓ) du catalyseur SCR (5) sont déterminés et si la valeur seuil prédéfinie n'est pas atteinte pour la capacité de remplissage réelle (Sp_{NH3}) une fraction du rendement maximal réel possible en tant que rendement théorique est prédéfinie.

11. Procédé selon la revendication 10, **caractérisé en ce que** le facteur d'adaptation à long terme est déterminé de telle sorte que la valeur estimée d'émission pure d'oxyde d'azote (NOx_{outcalc}) obtenue aurait amené dans un cycle d'intégration précédent à une valeur caractéristique d'adaptation (K) de zéro ou approchant zéro.

12. Procédé selon l'une quelconque des revendications 1 à 11, **caractérisé en ce que** lors du calcul de la valeur de niveau de remplissage d'ammoniac (F) on prend en compte une conversion directe d'ammoniac à l'aide d'oxygène.

13. Procédé selon l'une quelconque des revendications 1 à 12, **caractérisé en ce qu'**au moins pour atteindre le niveau de remplissage théorique de l'ammoniac stocké dans le catalyseur SCR, on effectue une régulation du niveau de remplissage d'ammoniac en fonction du modèle.
